# EUROPEAN PATENT SPECIFICATION

(11) **EP 3 885 903 B1**
(45) Date of publication and mention of the grant of the patent: **26.03.2025**
(21) Application number: 19886325.0
(22) Date of filing: 21.11.2019
(51) Int. Cl.: G06F 9/455, G06F 8/61, G06F 8/65

(54) **CLOUD DESKTOP UPGRADE METHOD, CLOUD SERVER, AND STORAGE MEDIUM**
VERFAHREN ZUM UPGRADEN EINES CLOUD-DESKTOPS, CLOUD-SERVER UND SPEICHERMEDIUM
PROCÉDÉ DE MISE À JOUR DE BUREAU EN NUAGE, SERVEUR EN NUAGE ET SUPPORT DE STOCKAGE

(30) Priority: 23.11.2018 CN 201811409392
(43) Date of publication of application: 29.09.2021
(73) Proprietor: ZTE Corporation, Shenzhen Guangdong 518057 (CN)
(72) Inventor: YU, Tao, Shenzhen, Guangdong 518057 (CN)
(74) Representative: Zoli, Filippo
(86) International application number: PCT/CN2019/119962
(87) International publication number: WO 2020/103904

(56) References cited:
- CN-A- 102 037 444
- CN-A- 103 019 802
- CN-A- 107 273 146
- US-A1- 2010 107 113
- US-A1- 2012 297 181
- US-A1- 2015 012 570
- US-A1- 2015 089 172

## Description

### TECHNICAL FIELD

Embodiments of the present invention relate to the field of software technology, and in particular to a cloud desktop upgrade technology.

### BACKGROUND

At present, virtual desktop infrastructure (VDI) has been widely used. VDI can quickly deploy universal virtual desktops by running operating systems on a server in a data center. Users get connected with and access virtual desktops through client computing protocols from client devices, just like accessing traditional locally installed desktops. A single server can support many virtual desktops at the same time for users to use individually.

However, it has been found that there are at least the following problems in the existing technology: a base image of a virtual desktop is strongly associated with the operation of each user, and the software inside the base image cannot be upgraded after the base image is generated and distributed to each virtual machine, so that the virtual machine can only be maintained and upgraded by each user, which causes huge system consumption and makes it difficult to realize synchronous management.

US20100107113A1 describes a system and method that separates a base machine image from any changes made by a user during a machine's lifetime, while presenting a unified view of the disk (having the base image and the user data) to the user. In particular, the system and method of D1 splits up the hard disk into a base portion, which contains the base image deployed by the provisioning server, and a user delta disk component, which contains the user's environment. By operating at the file level, the invention described in D1 allows the merging of files from both the base image and user delta disk for providing a unified view to the user. Thus, D1 allows the base image to be upgraded independently, where any changes to the base image can be used without having to propagate the changes to a user delta disk.

While the above patent application may achieve its intended purposes, there is still a need for a new and improved cloud desktop upgrade method.

### SUMMARY

The present invention is defined by the independent claims. Specific embodiments are defined by the dependent claims.

Embodiments of the present invention are intended to provide a method and a device for upgrading a cloud desktop, a cloud server and a storage medium, so as to realize the unified upgrade and maintenance of the cloud desktop, reduce the consumption of system resources and improve the user experience.

In order to at least partially address the above technical problem, an embodiment of the present invention provides a method for upgrading a cloud desktop, including: building a base image of an operating system in advance; where an independent disk is allocated individually to a virtual machine corresponding to a cloud desktop, and the base image is configured for starting the operating system of the virtual machine, and the independent disk is configured for storing private data of a user and a record of a modification made by the user to a system disk, such that the virtual machine is able to acquire the private data of the user and the record of the modification to the system disk by mounting the independent disk during running; and upgrading the base image, and synchronously updating the independent disk according to the upgraded base image, the updated independent disk including the upgraded base image.

An embodiment of the present invention further provides a device for upgrading a cloud desktop, including: an allocation unit, configured for individually allocating an independent disk to a virtual machine corresponding to a cloud desktop; where, the independent disk is configured for storing private data of a user and a record of a modification made by the user to a system disk, such that the virtual machine is able to acquire the private data of the user and the record of the modification to the system disk by mounting the independent disk during running; a base image building module, configured for building a base image of an operating system, where the base image is configured for starting the operating system of the virtual machine; and an upgrade module, configured for upgrading the base image and synchronously updating the independent disk according to the upgraded base image, the updated independent disk including the upgraded base image.

An embodiment of the present invention further provides a cloud server, including: at least one processor; and a memory communicatively connected to the at least one processor; where, the memory is configured to store instructions executable by the at least one processor, and the instructions, when executed by the at least one processor, cause the at least one processor to execute the method for upgrading a cloud desktop described above.

An embodiment of the present invention further provides a computer readable storage medium storing a computer program which, when executed by a processor, causes the processor to perform the method for upgrading a cloud desktop described above.

### BRIEF DESCRIPTION OF DRAWINGS

One or more embodiments are illustrated with reference to the corresponding drawings, which do not constitute a limitation of the embodiments, in which:
FIG. 1 is a flowchart of a method for upgrading a cloud desktop according to a first embodiment of the present invention;
FIG. 2 is a schematic diagram of a VDI system framework according to the existing technology;
FIG. 3 is a schematic diagram of a VDI system framework according to the first embodiment of the present invention;
FIG. 4 is a flowchart of a method for upgrading a cloud desktop according to a second embodiment of the present invention;
FIG. 5 is a schematic diagram of file filtering according to a third embodiment of the present invention;
FIG. 6 is a schematic structural diagram of a device for upgrading a cloud desktop according to a fourth embodiment of the present invention; and
FIG. 7 is a schematic structural diagram of a cloud server according to a fifth embodiment of the present invention.

### DETAILED DESCRIPTION

In order to make the objects, technical themes and advantages of the embodiments of the present invention clearer, various embodiments of the present invention will be described in detail below with reference to the accompanying drawings. However, those having ordinary skill in the art will appreciate that in various embodiments of the present invention, many technical details are proposed for a better understanding of the present application.

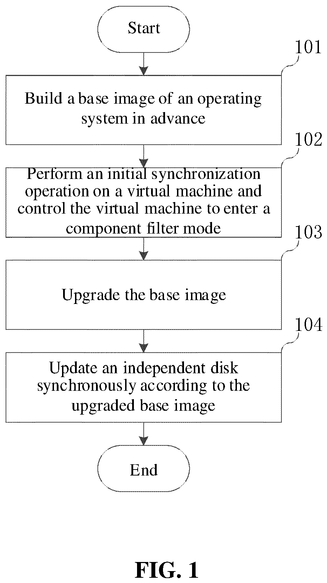

The first embodiment of the present invention relates to a method for upgrading a cloud desktop, and the process is shown in FIG. 1. In cloud desktop technology, the desktop of an operating system is no longer limited to running on a specific hardware, and all data are stored in the cloud and displayed to users through visual desktop. Users can log on to the desktop of the operating system through the network and work at any time. In this embodiment, a base image of an operating system is built in advance, where an independent disk is allocated individually to a virtual machine corresponding to a cloud desktop to preserve data of each virtual machine; and the base image is upgraded and the independent disk is updated synchronously according to the upgraded base image. In this way, the upgrade of the base image and a record of a modification made by a user are incorporated into the independent disk, which provides unified upgrade and maintenance of the cloud desktop, simplified update operation for the virtual machine, reduced consumption of system resources and improved user experience. The process of FIG. 1 is illustrated below, which includes the following steps 101 to 104.

At step 101, a base image of an operating system is built in advance.

The base image is configured for starting the operating system of a virtual machine corresponding to a cloud desktop. An administrator uses an ISO file to install the operating system of the virtual machine. After the operating system is installed, components (here referring to application programs and operating system fix packs, etc.) are installed as required. After that, software (minifilter driver, etc.) that can provide upgrade service for the components is installed. After the software that can provide upgrade service for the components is installed, the upgrade service for the components is in an idle state. Then, the operating system is restarted, and after the restart takes effect, the base image is built successfully.

A management center individually allocates an independent disk to each virtual machine. The independent disk is configured for storing private data of a user and a record of a modification made by the user to a system disk, such that the virtual machine can acquire the private data of the user and the record of the modification to the system disk by mounting the independent disk during running.

In the process of allocating an independent disk to a virtual machine by the management center, each virtual machine may be allocated with a disk individually. Alternatively, a plurality of virtual machines may be grouped and each group of virtual machines is allocated with a disk. When each virtual machine is individually allocated with an independent disk, the independent disk is configured for storing private data of the user and the record of the modification made by the user to the system disk for the virtual machine. When each group of virtual machines is allocated with a disk, the disk is divided into a plurality of storage blocks, where each of the plurality of storage blocks corresponds to a respective virtual machine in the group of virtual machines and is configured for storing the private data of the user and the record of the modification made by the user to the system disk for the respective virtual machine. This is an optimization scheme for saving system resources and does not affect the storage of the private data of each user and the storage of the record of the modification. In this way, a plurality of virtual machines in the same group share a disk in the case of a large scale of users, which effectively saves system resources.

At step 102, an initial synchronization operation is performed on a virtual machine, and the virtual machine is controlled to enter a component filter mode.

The operating system of the virtual machine is started according to the base image, to mount the allocated independent disk, an initial synchronization operation is performed on the virtual machine and the virtual machine is controlled to enter the component filter mode, such that the independent disk has the following two parts: one is the private data of the user modified to the independent disk by a registry of the virtual machine, such as "My Document", "Download", "Picture" and other directory documents; and the other is a generated virtual disk file, which includes a registry of the virtual machine and a guestfile, and is configured for storing all records of the modifications made by the user to the system disk (such as disk C). The guestfile is configured for recording a record of an operation on a storage file in the system disk, and each guestfile corresponds to a storage file in the system disk. The registry of the virtual machine is configured for recording a record of an operation made by the user to a registry of the system disk, and the registry of the virtual machine corresponds to the registry of the system disk.

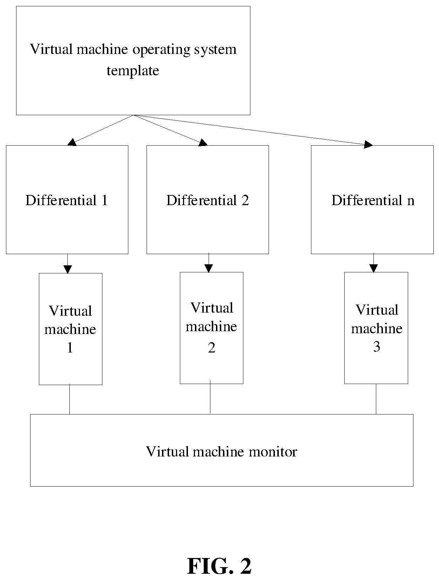

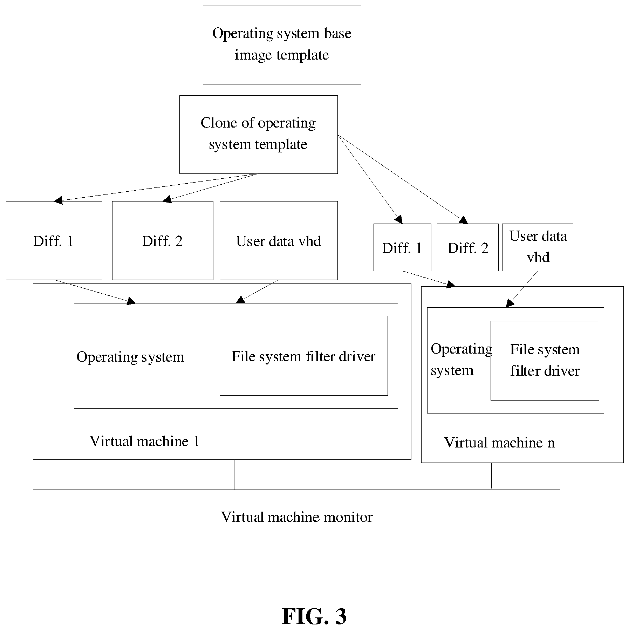

In the component filter mode, the virtual machine can use a file system filter driver of the operating system to filter the operation to the system disk. In this embodiment, the original VDI system (the original VDI system framework is shown in FIG. 2) is modified, involving a file system minifilter driver, and the modified VDI system is shown in FIG. 3. By using the file system minifilter driver of the operating system, file redirection and registry redirection of the virtual machine are realized, and the modifications are recorded and stored.

Since the file system filter driver is a function of the operating system, the modifications of this embodiment does not involve modifications of the underlying mechanism. Therefore, in this way, the compatibility and adaptation of the original underlying mechanism are ensured, and the file content attributes in the operating system are distributed on a plurality of disk clusters, and each of the plurality of disk clusters contains information of a plurality of files, which effectively improves the granularity requirement.

At step 103, the base image is upgraded.

When the base image is started by a virtual machine, the administrator sends a message of "Start Synchronization", and the upgrade service for components switches from an idle state to a synchronous state. The upgrade of the base image includes modifications to the system disk, such as installing an application, uninstalling an application, updating an application, etc. The installation of the application is decided by the administrator, where the installation path of the application is under the system disk. During making modifications to the system disk, a log file of NTFS system is used to automatically record modifications to the file, the file system filter driver of the operating system is used to filter the operations for the system disk, and the filtering result is redirected to the guestfile corresponding to the operated storage file and the registry of the virtual machine.

At step 104, the independent disk is updated synchronously according to the upgraded base image.

The updated independent disk includes the upgraded base image, and the upgraded base image includes a record of a modification to a file during upgrading the base image. According to the record of the modification to the file, the guestfile and the registry of the virtual machine included in the virtual disk file are updated. After the administrator completes the upgrade of the base image, the message "Start Synchronization" is triggered, and the upgraded base image is cloned to generate two upgraded differential images, one of which is configured for starting the operating system of the virtual machine, and the other is configured for creating a guestfile. In this embodiment, each independent disk may correspond to an upgraded base image. Alternatively, a plurality of independent disks may be grouped so that each group of independent disks corresponds to an upgraded base image. In this way, the plurality of independent disks in the same group share a base image in the case of a large scale of users, which effectively saves system resources. After the operating system of the virtual machine is started and the virtual machine is in a synchronous state, the virtual disk file and the other differential image configured for creating a guestfile are mounted, traversal is performed on the log file to obtain the record of the modification to the file during upgrading the base image, and the guestfile and the registry of the virtual machine are updated according to the record of the modification to the file. In this way, the record of the modification to the file during upgrading the base image are incorporated into the independent disk, such that during mounting the independent disk, the virtual machine can obtain the upgraded base image, the private data of the user and the record of the modification to the system disk, thus realizing the unified maintenance of the cloud desktop and reducing the consumption of system resources.

A detailed description will be given below. During upgrading the base image by the administrator, storage file A is modified to become file A1. After the independent disk is updated synchronously according to the upgraded base image, the virtual machine mounts the virtual disk file, obtains the record of the modification made by the user to the storage file A (such as the modification of the 10^{th} bit to the 20^{th} bit of the file A), and obtains a file A1' with the record of the modification by the user according to the file A1 obtained during upgrading the base image and the record of the modification made by the user. The file A1' includes the record of the modification to the file of the upgraded base image and the record of the modification made by the user to the system disk. That is to say, the independent disk after synchronous update completes the upgrade process.

Compared with the existing technology, in this embodiment, the administrator builds a base image of an operating system in advance, where a virtual machine corresponding to a cloud desktop is individually allocated with an independent disk for storing private data of the user and a record of a modification made by the user to the system disk, such that the virtual machine can obtain the private data of the user and the record of the modification to the system disk by mounting the independent disk during running. The record of the modification made by the user to the system disk is stored in the independent disk by a registry of the virtual machine and a guestfile. The base image is upgraded, and the independent disk is updated synchronously according to the upgraded base image, where the updated independent disk includes the upgraded base image. In this way, the record of the modification to the file during upgrading the base image are incorporated into the independent disk, such that during mounting the independent disk, the virtual machine can obtain the upgraded base image, the private data of the user and the record of the modification to the system disk, thus realizing the unified maintenance of the cloud desktop, reducing the consumption of system resources and improving the user experience.

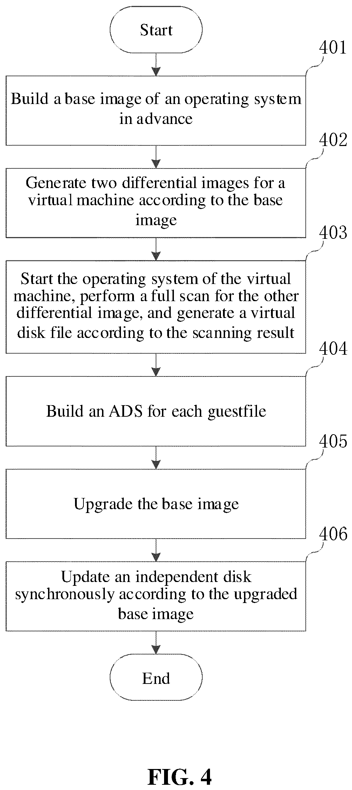

The second embodiment of the present invention relates to a method for upgrading a cloud desktop, and the process is shown in FIG. 4. The second embodiment is substantially the same as the first embodiment, with the main difference being that in the second embodiment of the present invention, how to perform an initial synchronization operation on a virtual machine is further detailed. The process of FIG. 4 will be described in detail below, which includes the following steps 401 to 406.

At step 401, a base image of an operating system is built in advance. This step is the same as step 101, and will not be repeated here.

At step 402, two differential images are generated for a virtual machine according to the base image.

The two differential images are generated by cloning the base image, one is configured for starting the operating system of the virtual machine and the other is configured for creating a guestfile. In this way, there is a reasonable and clear division of responsibility for the two differential images, which is favorable to improve the operating efficiency of the system.

At step 403, the operating system of the virtual machine is started, a full scan is performed for the other differential image, and a virtual disk file is generated according to the scanning result.

The operating system of the virtual machine is started by the differential image, and it is determined whether the disk mounted by the virtual machine during running is a disk for storing private data of a user; if so, it is determined whether the mounted disk has been formatted; and if not, the mounted disk is formatted. Then, the virtual machine mounts an independent disk and performs an initial synchronization operation. A full scan is performed for the differential image configured for creating a guestfile, and a virtual disk file (the file name may be cmap.vhd) is generated according to the scanning result. The virtual disk file includes a registry of the virtual machine and a guestfile. The registry of the virtual machine is configured for recording a modification of user's relevant directory document (such as "My Document", "Download" and "Picture", etc) made to a registry of the system disk. The guestfile is configured for recording a record of an operation on a storage file in the system disk, and each guestfile corresponds to a storage file in the system disk. An alternative data stream (ADS) may be established for each guestfile. The name of ADS includes a file identifier (file ID) of the storage file (i.e., hostfile) in the corresponding system disk, thus building a corresponding relationship between the guestfile and the C disk file. According to the characteristics of NTFS file system, each storage file in the system disk contains a unique file ID, so the corresponding relationship between the guestfile and the storage file in the system disk can be obtained through the file ID, which is convenient for updating the independent disk synchronously.

In practical application, the guestfile may be constructed according to a sparse file, which does not contain real file contents, but contains file attributes, such as creation time, file size, etc. Since the guestfile is a sparse file, only real and non-blank data blocks are written to the disk, and blank data blocks are represented by short information instead of occupying actual space, which effectively saves disk space when the file contents are mostly blank, improves the utilization rate of disk space and reduces the time consumption of writing files for the first time.

At step 404, the virtual machine is controlled to enter a component filter mode. After the synchronization is completed, the system is restarted to enter the component filter mode. In the component filter mode, all operations performed by the user to files of the system disk (such as the C disk) are filtered by minifilter, that is, the file system filter driver (minifilter hierarchical framework) provided by Windows Driver Toolkit is used to intercept and redirect all the operations for the system disk by the user, including file create, file open, file read, file write, file control and so on. Any modifications are incrementally redirected and written to the guestfile.

At step 405, the base image is upgraded. This step is the same as step 103, and will not be repeated here.

At step 406, the independent disk is updated synchronously according to the upgraded base image. This step is the same as step 104, and will not be repeated here.

In this embodiment, a record of a modification to a file during upgrading the base image is acquired, and the guestfile and the registry of the virtual machine are updated according to the record of the modification to the file. When there is a conflict between a record of an operation on a corresponding storage file recorded in the guestfile and a record of an operation on a corresponding storage file recorded in the record of the modification to the file, the guestfile is deleted. According to the corresponding storage file recorded in the record of the modification to the file, a corresponding guestfile is regenerated, and an ADS is built for the regenerated guestfile. If a user modifies a storage file, and the administrator also modifies the same storage file during upgrading the base image, a conflict of records of operations will be caused. In the above way, by discarding the record of the operation made by the user to the storage file and taking the record of the modification to the file during upgrading the base image as the standard, the conflict between the modification made by the user and the modification made by the administrator is solved. In addition, during updating the registry, if conflicts of the same type above are encountered, the record of the modification made by the administrator to a file during upgrading the base image is still taken as the standard.

Compared with the existing technology, the present embodiment provides a way to perform an initial synchronization operation on a virtual machine. After an independent disk is allocated to the virtual machine, two differential images are generated for the virtual machine according to the base image, one is configured for starting the operating system of the virtual machine and the other is configured for creating the guestfile, so that there is a reasonable and clear division of responsibility for the two differential images, which is favorable to improve the operating efficiency of the system. After the operating system of the virtual machine is started, a full scan is performed for the other differential image, and a virtual disk file is generated according to the scanning result. The virtual disk file includes a registry of the virtual machine corresponding to a registry of the system disk and each guestfile corresponding to a storage file in the system disk. An ADS is built for each guestfile, and the name of ADS includes a file ID of the storage file in the corresponding system disk, so that the corresponding relationship between the guestfile and the storage file in the system disk can be obtained through ADS, which is convenient for updating the independent disk synchronously. Moreover, the guestfile is a sparse file, which can effectively save disk space, improve the utilization rate of disk space and reduce the time consumption of writing files for the first time.

The third embodiment of the present invention relates to a method for upgrading a cloud desktop. In this embodiment, step 404 in the second embodiment is further refined. At step 404, operations to the system disk are filtered by the file system minifilter driver, so that all operations performed by the user to files of the system disk (such as the C disk) are redirected to an independent disk. In this way, by using the standard solution specification of the file system filter driver of the operating system, it is very convenient to monitor and interfere with the operations to the system disk, and write the record of the modification made by the user to the system disk into the independent disk without destroying the integrity of the original operation execution and record of the modification.

Filtered operations, including creation request (IRP_MJ_CREATE), file open operation, read request, write request, file close request, file cleanup request, fast read/write (Fast I/O) operation and file rename operation, will be described individually below.

In case that the filtered operation is a creation request (IRP_MJ_CREATE) of a storage file, IRP_MJ_CREATE interface is configured to open and create a file. Through the interface, a precallback operation can be processed in advance, and then a postcallback operation after the execution of lower driver can be processed. In the precallback operation, the input parameter includes a structure FLT_FILE_NAME_INFORMATION, which is used to indicate the full path of the storage file in the C disk. When the process reaches the postcallback operation, the full path of the C disk (for example, C: \dir1) may be obtained. In the precallback operation, the path corresponding to the full path of the C disk is modified to the path of the guestfile, for example, c: \dir1 corresponds to /volume1/dir1. In this way, the corresponding storage file is redirected to the guestfile in subsequent operations.

In case that the filtered operation is a write request to a storage file, incrementally modified data are written to a corresponding guestfile, and a location of the written data is recorded. A bitmap area is created in the ADS of the guestfile to record the occupation of the data written to the storage file. In the precallback operation, it is determined whether the storage file exists in the system disk, and if so, the write operation is carried out through the write request. After the write operation is successful, the incrementally modified data are written into the corresponding guestfile. At the same time, the location of the written data is recorded in the bitmap area, including the location offset and length of the data written to the storage file. If the filtered operation is a plurality of consecutive write requests to the storage file, the locations of the plurality of consecutive written data are merged into one record and recorded in the bitmap area. In this way, the occupation of data to be written to the file is recorded, such that the file size of the guestfile is effectively controlled, and the record of the modification made by the user can be obtained according to the incrementally modified data stored in the guestfile and the location of the written data.

In case that the filtered operation is a read request to a storage file, it is determined whether the location of the read data falls into a linked list, and if the location of the read data falls into the linked list, the read operation is performed through the read request; if the read data span segments, multiple read operations will be performed.

In case that the filtered operation is a file close request to a storage file, a task request "Write the starting and ending sector locations in the bitmap area" is generated during the "pre" operation, then the task request is added to an I/O operation queue of the system and taken out of the queue by using a separate thread, and the writing action in the bitmap area is executed. Through this synchronous serial processing method, the write errors caused by mutual conflicts are effectively avoided.

In case that the filtered operation being a file cleanup request to a storage file, the corresponding guestfile and the file object in the original location are closed, and the handle is reclaimed.

In case that the filtered operation is a Fast I/O operation for a storage file, when an operation is obtained by filtering, it is determined whether the operation is a Fast I/O operation through system function FLT_IS_FASTIO_OPERATION during the "pre" operation; and if the filtered operation is a Fast I/O operation for the storage file, FLT_PREOP_DISALLOW_FASTIO function is returned. Since the Fast I/O operation is an I/O request packet (IRP) generated by the operating system, the Fast I/O operation transfers processing data directly in the system cache, rather than through the file system.

In case that the filtered operation is a file rename operation for a storage file, both the guestfile corresponding to the storage file and ADS of the guestfile are renamed. After the storage file is renamed and the base image is updated, it is difficult to locate the guestfile corresponding to the storage file in the subsequent operation, and since the corresponding relationship between the guestfile and the storage file is obtained according to ADS, the guestfile corresponding to the storage file and ADS of the guestfile are also renamed so as to obtain the guestfile accurately.

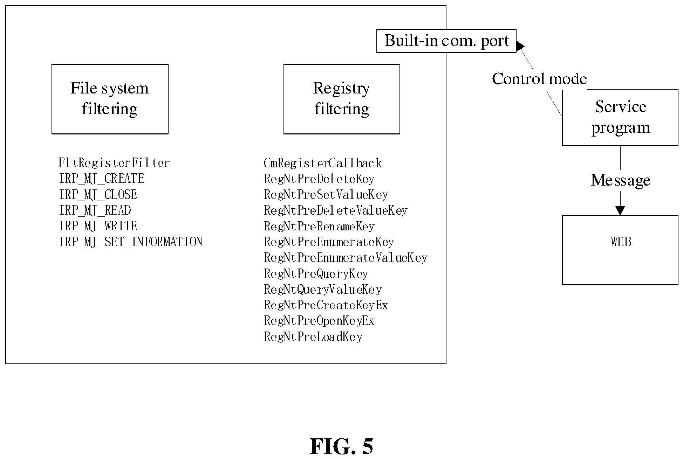

As shown in FIG. 5, when it comes to the processing flow of calling a file by the operating system, the file system minifilter hierarchical framework provided by windos WDK is configured to implement the processing flow of calling a file. The entry registration function is FltRegisterFilter, and the calling functions that can be processed include: IRP_MJ_CREATE, IRP_MJ_CLOSE, IRP_MJ_READ, IRP_MJ_WRITE, IRP_MJ_CLEANUP, IRP_MJ_QUERY_VOLUME_INFORMATION, IRP_MJ_SET_INFORMATION, etc.

When the application is running, api function of the operating system is called. When the file system filter driver intercepts a calling function, the filter driver intercepts the calling function and starts to perform filtering. Meanwhile, the currently running process is acquired and matched with a process in a blacklist of processes or a whitelist of processes in the prestored configuration file, and the intercepted content is processed according to the matching result. The blacklist indicates the situation that no processing is required and directly returning to the operating system, and the whitelist indicates the situation that filtering is required. If the currently running process cannot be matched in the blacklist and whitelist, the currently running process exists in the whitelist by default. Since there are many system calls, only file open and directory query will be described below.

As far as the interception of file open calling function is concerned, it is determined whether the current file open calling function is an access request to the system disk; if so, the file open calling function is redirected to the independent disk where the virtual disk file is mounted. The file ID of the file in the system disk requested to be opened is obtained through ADS, and the storage file in the corresponding system disk is opened according to the file ID. Meanwhile, StramContext function and StreamHandleContext function are set in the guestfile. In this way, subsequent file read request and file write request can be processed by determining whether a Context function exists. After the above operations are completed, return to the operating system.

As shown in FIG. 5, when it comes to the processing flow of calling a registry by the operating system, the file system minifilter hierarchical framework provided by windos WDK is configured to implement the processing flow of calling a registry. The entry registration function is CmRegisterCallback, and the calling functions that can be processed include: RegNtPreDeleteKey, RegNtPreDeleteValueKey, RegNtPreDeleteValueKey, RegNtPreRenameKey, RegNtPreEnumerateKey, RegNtPreEnumerateValueKey, RegNtPreQuery Key, RegNtQueryValueKey, RegNtPreCreateKeyEx, RegNtPreOpenKeyEx, RegNtPreLoadKey, etc.

As far as the interception of RegNtPreQueryKey is concerned, after the file system filter driver is loaded into the operating system, all modifications to the registry are recorded in the memory when the operating system is in a synchronous state. After the operating system finishes the synchronization state, all modifications to the registry are saved as a single file in hive format and stored in reg directory. When the operating system performs filtering, an independent disk is mounted and the files stored in the reg directory are connected. When the calling function is received, the same path in the registry of the independent disk is queried. If there is a query result, the query result is returned.

Then, the filtered operation for the system disk is redirected to the guestfile corresponding to the operated storage file.

This step provides a variety of situations in which the filtered operation for the system disk is redirected to the guestfile corresponding to the operated storage file and the registry of the virtual machine.

Compared with the existing technology, in this embodiment, the file system filter driver of the operating system is configured to filter the operations of the system disk, ensuring the compatibility and adaptation of the original underlying mechanism, and effectively improving the granularity requirement. In addition, the different operations obtained by filtering are further illustrated, that is, through file redirection and registry redirection, the modification made by the user to the system disk is recorded and saved.

The above methods are divided into steps for the sake of clear description. In the implementation process, these steps can be combined into one step or some of them can be split into several steps. The steps including the same logical relationship are all within the protection scope of this patent. Any insignificant modifications added or insignificant designs introduced to the algorithm or process without changing the core design of the algorithm and process are within the protection scope of this patent.

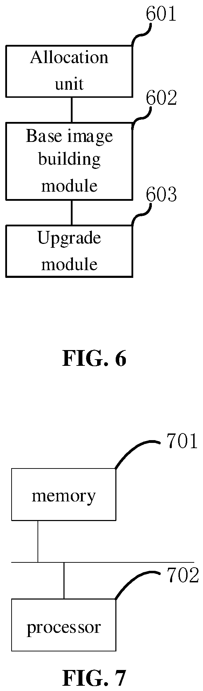

The fourth embodiment of the present invention relates to a device for upgrading a cloud desktop, as shown in FIG. 6, including an allocation unit 601, a base image building module 602 and an upgrade module 603.

The allocation unit 601 is configured to allocate an independent disk to a virtual machine corresponding to a cloud desktop. The independent disk is configured for storing private data of a user and a record of a modification made by the user to a system disk, such that the virtual machine can acquire the private data of the user and the record of the modification to the system disk by mounting the independent disk during running.

The base image building module 602 is configured to build a base image of an operating system, and the base image is configured for starting the operating system of the virtual machine.

The administrator uses an ISO file to install the operating system of the virtual machine and a series of components through the base image building module 602. After all the installation operations are completed, the operating system is restarted. After the restart takes effect, the base image building module 602 completes the building of the base image.

The upgrade module 603 is configured to upgrade the base image and synchronously update the independent disk according to the upgraded base image, where the updated independent disk includes the upgraded base image.

It is not difficult to find that this embodiment is a system embodiment corresponding to the first embodiment, and this embodiment may be implemented in cooperation with the first embodiment. The relevant technical details mentioned in the first embodiment still makes sense in this embodiment, which are not repeated here in order to reduce repetition. Accordingly, the relevant technical details mentioned in this embodiment may also be applied to the first embodiment.

It is worth mentioning that all modules involved in this embodiment are logic modules. In practical applications, a logic unit may be a physical unit, a part of a physical unit, or a combination of multiple physical units. In addition, in order to highlight the innovative part of the present invention, units not closely related to solving the technical problems proposed by the present invention are not introduced in this embodiment, but this does not mean that there are no other units in this embodiment.

The fifth embodiment of the present invention relates to a cloud server, as shown in FIG. 7, including at least one processor 702, and a memory 701 communicatively connected to the at least one processor 702. The memory 701 stores instructions executable by the at least one processor 702, and the instructions, when executed by the at least one processor 702, cause the at least one processor 702 to execute the above method for upgrading a cloud desktop.

The memory 701 and the processor 702 are connected by a bus. The bus may include any number of interconnected buses and bridges, and the bus connects the at least one processor with various circuits of the memory 701. The bus may also connect various other circuits such as peripheral devices, voltage regulators, power management circuits, etc., which are well known in the art and will not be further described here. A bus interface provides an interface between the bus and a transceiver. The transceiver may be one element or multiple elements, such as multiple receivers and transmitters, providing a unit for communicating with various other devices over a transmission medium. The data processed by the processor 702 are transmitted over a wireless medium via an antenna, and in some embodiments, the antenna also receives and transmits the data to the processor 702.

The processor 702 is responsible for bus management and general processing, and may also provide various functions, including timing, peripheral interface, voltage regulation, power management and other control functions. The memory 701 may be used to store data used by the processor during executing operations.

It is worth mentioning that all modules involved in this embodiment are logic modules. In practical applications, a logic unit may be a physical unit, a part of a physical unit, or a combination of multiple physical units. In addition, in order to highlight the innovative part of the present invention, units not closely related to solving the technical problems proposed by the present invention are not introduced in this embodiment, but this does not mean that there are no other units in this embodiment.

The sixth embodiment of the present invention relates to a computer readable storage medium storing a computer program. The computer program, when executed by a processor, cause the processor to implement the above method embodiments.

It can be understood by those having ordinary skill in the art that all or part of the steps in the above embodiment method may be implemented by instructing relevant hardware through a program, which is stored in a storage medium and includes a number of instructions to enable a device (which may be a single chip microcomputer, a chip, etc.) or a processor to execute all or part of the steps of the method described in each embodiment of the present application. The aforementioned storage media include: U disk, mobile hard disk, ROM (Read-Only Memory), RAM (Random Access Memory), magnetic disk, optical disk and other media that can store program codes.

According to the embodiments of the present invention, a base image of an operating system is built in advance, and an independent disk is allocated individually to a virtual machine corresponding to a cloud desktop, where the base image is configured for starting the operating system of the virtual machine, and the independent disk is configured for storing private data of a user and a record of a modification made by the user to a system disk. In this way, the virtual machine can acquire the private data of the user and the record of the modification to the system disk by mounting the independent disk during running, thus realizing the retention of each virtual machine's own data. The base image is upgraded, and the independent disk is updated synchronously according to the upgraded base image, where the updated independent disk includes the upgraded base image. In this way, the upgrade of the base image and the record of the modification made by the user are merged into an independent disk, which realizes the unified upgrade and maintenance of the cloud desktop, simplifies the update operation for the virtual machine, reduces the consumption of system resources and improves the user experience. That is to say, each time the administrator uniformly upgrades the base image, including software installation, uninstallation, update, system fix packs installation, etc., and uniformly triggers the update event, each virtual machine can retain its own user data and merge the update of the base template, which may only need to restart the machine, without updating each virtual machine individually.

## Claims

1. A method for upgrading a cloud desktop, comprising:
building a base image of an operating system in advance (101, 401); wherein,
an independent disk is allocated individually to a virtual machine corresponding to a cloud desktop, and the base image is configured for starting the operating system of the virtual machine, and
the independent disk is configured for storing private data of a user and a record of a modification made by the user to a system disk, such that the virtual machine is able to acquire the private data of the user and the record of the modification to the system disk by mounting the independent disk during running; and
upgrading the base image (103, 405), and synchronously updating the independent disk according to the upgraded base image (104, 406), the updated independent disk corresponding to the upgraded base image;
wherein synchronously updating the independent disk according to the upgraded base image comprises:
cloning the upgraded base image to generate two upgraded differential images, one of which is configured for starting the operating system of the virtual machine, and the other is configured for creating a guestfile;
in response to starting the operating system of the virtual machine and the virtual machine being in a synchronous state, mounting a virtual disk file and the other differential image configured for creating a guestfile;
acquiring a record of a modification to a file during upgrading the base image; and
updating the guestfile and a registry of the virtual machine according to the record of the modification to the file.

2. The method for upgrading a cloud desktop of claim 1, wherein,
the record of the modification made by the user to the system disk is stored in the independent disk by the registry of the virtual machine and the guestfile; and
the guestfile is in a one-to-one correspondence with a storage file in the system disk and is configured for recording a record of an operation on a corresponding storage file; the registry of the virtual machine corresponds to a registry of the system disk, and the registry of the virtual machine is configured for recording a record of an operation made by the user to the registry of the system disk.

3. The method for upgrading a cloud desktop of claim 2, wherein the guestfile is a sparse file.

4. The method for upgrading a cloud desktop of claim 2, wherein after building the base image of the operating system in advance and individually allocating the independent disk to the virtual machine corresponding to the cloud desktop, the method further comprises:
generating two differential images for the virtual machine according to the base image (402), wherein one differential image is configured for starting the operating system of the virtual machine, and the other differential image is configured for creating the guestfile.

5. The method for upgrading a cloud desktop of claim 4, wherein the guestfile is created by:
scanning the other differential image fully after starting the operating system of the virtual machine;
generating the virtual disk file according to a scanning result (403), wherein the virtual disk file comprises the registry of the virtual machine and the guestfile in a one-to-one correspondence with the storage file in the system disk; and
building an alternative data stream (ADS) for each guestfile (404), a name of the ADS comprising a file identifier of a corresponding storage file in the system disk.

6. The method for upgrading a cloud desktop of claim 2, wherein the record of the modification made by the user to the system disk is stored in the independent disk by:
filtering an operation for the system disk using a file system filter driver of the operating system, and redirecting the filtered operation for the system disk to the guestfile corresponding to the operated storage file and the registry of the virtual machine (102).

7. The method for upgrading a cloud desktop of claim 6, wherein redirecting the filtered operation for the system disk to the guestfile corresponding to the operated storage file comprises:
in response to the filtered operation being a write request to the storage file, writing incrementally modified data into the corresponding guestfile, and recording a location of the written data.

8. The method for upgrading a cloud desktop of claim 1, wherein updating the guestfile according to the file record of the modification comprises:
deleting the guestfile in response to a conflict existing between the record of the operation for the corresponding storage file recorded in the guestfile and a record of an operation for the corresponding storage file recorded in the record of the modification to the file; and
regenerating a corresponding guestfile according to the corresponding storage file recorded in the record of the modification to the file.

9. A cloud server, comprising:
at least one processor (702); and
a memory (701) communicatively connected to the at least one processor (702); wherein,
the memory (701) is configured to store instructions executable by the at least one processor (702), and the instructions, when executed by the at least one processor (702), cause the at least one processor (702) to execute the method for upgrading a cloud desktop of any of claims 1 to 8.

10. A computer readable storage medium storing a computer program which, when executed by a processor, causes the processor to perform the method for upgrading a cloud desktop of any of claims 1 to 8.

## Patentansprüche

1. Verfahren zum Upgraden eines Cloud-Desktops, umfassend:
Aufbauen eines Basis-Images eines Betriebssystems im Voraus (101, 401); wobei einer virtuellen Maschine, die einem Cloud-Desktop entspricht, individuell eine unabhängige Festplatte zugewiesen wird, und das Basis-Image zum Starten des Betriebssystems der virtuellen Maschine konfiguriert ist, und
die unabhängige Festplatte konfiguriert ist, um private Daten eines Benutzers und eine Aufzeichnung einer Modifikation, die von dem Benutzer an einer Systemfestplatte vorgenommen wurde, zu speichern, sodass die virtuelle Maschine in der Lage ist, die privaten Daten des Benutzers und die Aufzeichnung der Modifikation an der Systemfestplatte durch Einhängen des unabhängigen Datenträgers während des Betriebs zu erfassen; und
Aktualisieren des Basis-Image (103, 405) und synchrones Aktualisieren der unabhängigen Festplatte entsprechend dem aktualisierten Basis-Image (104, 406), wobei die aktualisierte unabhängige Festplatte dem aktualisierten Basis-Image entspricht;
wobei ein synchrones Aktualisieren der unabhängigen Festplatte gemäß dem aktualisierten Basis-Image Folgendes umfasst:
Klonen des aktualisierten Basis-Images, um zwei aktualisierte Differenz-Images zu erzeugen, wovon eines zum Starten des Betriebssystems der virtuellen Maschine und das andere zum Erstellen einer Gastdatei konfiguriert ist;
als Reaktion auf ein Starten des Betriebssystems der virtuellen Maschine und darauf, dass die virtuelle Maschine in einem synchronen Zustand ist, Mounten einer virtuellen Festplattendatei und des anderen Differenz-Image, das zum Erstellen einer Gastdatei konfiguriert ist;
Erfassen einer Aufzeichnung einer Änderung an einer Datei während eines Aktualisierens des Basis-Images; und
Aktualisieren der Gastdatei und einer Registrierung der virtuellen Maschine gemäß der Aufzeichnung der Änderung in der Datei.

2. Verfahren zum Upgraden eines Cloud-Desktops nach Anspruch 1, wobei die Aufzeichnung der von dem Benutzer an der Systemfestplatte vorgenommenen Änderung in der unabhängigen Festplatte durch das Registrieren der virtuellen Maschine und der Gastdatei gespeichert wird; und
die Gästedatei in einer Eins-zu-Eins-Entsprechung mit einer Speicherdatei in der Systemfestplatte ist und zum Aufzeichnen einer Aufzeichnung eines Vorgangs auf einer entsprechenden Speicherdatei konfiguriert ist; die Registrierung der virtuellen Maschine einer Registrierung der Systemfestplatte entspricht und die Registrierung der virtuellen Maschine zum Aufzeichnen einer Aufzeichnung eines Vorgangs konfiguriert ist, die von dem Benutzer an der Registrierung der Systemfestplatte vorgenommen wird.

3. Verfahren zum Upgraden eines Cloud-Desktops nach Anspruch 2, wobei die Gastdatei eine Sparse-Datei ist.

4. Verfahren zum Upgraden eines Cloud-Desktops nach Anspruch 2, wobei das Verfahren nach Aufbauen des Basis-Images des Betriebssystems im Voraus und individuellem Zuweisen der unabhängigen Festplatte zu der virtuellen Maschine, die dem Cloud-Desktop entspricht, ferner Folgendes umfasst:
Erzeugen von zwei Differenz-Images für die virtuelle Maschine gemäß dem Basis-Image (402), wobei ein Differenz-Image zum Starten des Betriebssystems der virtuellen Maschine konfiguriert ist und das andere Differenz-Image zum Erzeugen der Gastdatei konfiguriert ist.

5. Verfahren zum Upgraden eines Cloud-Desktops nach Anspruch 4, wobei die Gastdatei erstellt wird durch:
vollständiges Scannen des anderen Upgradens nach Starten des Betriebssystems der virtuellen Maschine;
Erzeugen der virtuellen Festplattendatei gemäß einem Scan-Resultat (403), wobei die virtuelle Festplattendatei die Registrierung der virtuellen Maschine und die Gastdatei in einer Eins-zu-Eins-Entsprechung mit der Speicherdatei auf der Systemfestplatte umfasst;
und
Aufbauen eines alternativen Datenstroms (ADS) für jede Gastdatei (404), wobei ein Name des ADS einen Dateibezeichner einer entsprechenden Speicherdatei auf der Systemfestplatte umfasst.

6. Verfahren zum Upgraden eines Cloud-Desktops nach Anspruch 2, wobei die Aufzeichnung der von dem Benutzer an der Systemfestplatte vorgenommenen Änderung auf der unabhängigen Festplatte gespeichert wird, durch:
Filtern eines Vorgangs für die Systemfestplatte unter Verwendung eines Dateisystem-Filtertreibers des Betriebssystems und Umleiten des gefilterten Vorgangs für die Systemfestplatte an die Gastdatei, die der betriebenen Speicherdatei und der Registrierung der virtuellen Maschine (102) entspricht.

7. Verfahren zum Upgraden eines Cloud-Desktops nach Anspruch 6, wobei ein Umleiten des gefilterten Vorgangs für die Systemfestplatte auf die Gastdatei, die der betriebenen Speicherdatei entspricht, Folgendes umfasst:
als Reaktion darauf, dass der gefilterte Vorgang eine Schreibanforderung an die Speicherdatei ist, Schreiben inkrementell modifizierter Daten in die entsprechende Gastdatei und Aufzeichnen einer Stelle der geschriebenen Daten.

8. Verfahren zum Upgraden eines Cloud-Desktops nach Anspruch 1, wobei ein Aktualisieren der Gastdatei gemäß der Dateiaufzeichnung der Modifikation Folgendes umfasst:
Löschen der Gastdatei als Reaktion auf einen Konflikt, der zwischen der Aufzeichnung des Vorgangs für die entsprechende Speicherdatei, die in der Gastdatei aufgezeichnet ist, und
einer Aufzeichnung eines Vorgangs für die entsprechende Speicherdatei, die in der Aufzeichnung der Modifikation der Datei aufgezeichnet ist, besteht; und
erneutes Erzeugen einer entsprechenden Gastdatei gemäß der entsprechenden Speicherdatei, die in der Aufzeichnung der Änderung der Datei aufgezeichnet ist.

9. Cloud-Server, umfassend:
mindestens einen Prozessor (702); und
einen Speicher (701), der kommunikativ mit dem mindestens einen Prozessor (702) verbunden ist; wobei der Speicher (701) konfiguriert ist, um Anweisungen zu speichern, die von dem mindestens einen Prozessor (702) ausführbar sind, und die Anweisungen, wenn sie von dem mindestens einen Prozessor (702) ausgeführt werden, den mindestens einen Prozessor (702) veranlassen, das Verfahren zum Upgraden eines Cloud-Desktops nach einem der Ansprüche 1 bis 8 auszuführen.

10. Computerlesbares Speichermedium, das ein Computerprogramm speichert, das, wenn es von einem Prozessor ausgeführt wird, den Prozessor veranlasst, das Verfahren zum Upgraden eines Cloud-Desktops nach einem der Ansprüche 1 bis 8 durchzuführen.

## Revendications

1. Procédé de mise à niveau d'un ordinateur de bureau en nuage, comprenant :
la construction d'une image de base d'un système d'exploitation à l'avance (101, 401) ; dans lequel,
un disque indépendant est affecté individuellement à une machine virtuelle correspondant à un ordinateur de bureau en nuage, et l'image de base est configurée pour démarrer le système d'exploitation de la machine virtuelle, et
le disque indépendant est configuré de façon à stocker les données privées d'un utilisateur et un enregistrement d'une modification apportée par l'utilisateur à un disque système, de sorte que la machine virtuelle soit en mesure d'acquérir les données privées de l'utilisateur et
l'enregistrement de la modification apportée au disque système en montant le disque indépendant pendant le fonctionnement de la machine virtuelle ; et
la mise à jour de l'image de base (103, 405) et la mise à jour synchrone du disque indépendant en fonction de l'image de base mise à jour (104, 406), le disque indépendant mis à jour correspondant à l'image de base mise à jour ;
dans lequel la mise à jour synchrone du disque indépendant en fonction de l'image de base mise à jour comprend :
le clonage de l'image de base mise à jour afin de générer deux images différentielles mises à jour, dont l'une est configurée pour démarrer le système d'exploitation de la machine virtuelle, et l'autre est configurée pour créer un fichier invité ;
en réponse au démarrage du système d'exploitation de la machine virtuelle et à l'état synchrone de la machine virtuelle, le montage d'un fichier de disque virtuel et de l'autre image différentielle configurée pour créer un fichier invité ;
l'acquisition d'un enregistrement d'une modification d'un fichier pendant la mise à niveau de l'image de base ; et
la mise à jour du fichier invité et d'un registre de la machine virtuelle en fonction de l'enregistrement de la modification du fichier.

2. Procédé de mise à jour d'un ordinateur de bureau en nuage selon la revendication 1, dans lequel, l'enregistrement de la modification apportée par l'utilisateur au disque système est stocké dans le disque indépendant au moyen du registre de la machine virtuelle et du fichier invité ; et le fichier invité est en correspondance biunivoque avec un fichier de stockage du disque système et est configuré pour enregistrer une opération sur un fichier de stockage correspondant ; le registre de la machine virtuelle correspond à un registre du disque système, et le registre de la machine virtuelle est configuré pour enregistrer une opération effectuée par l'utilisateur sur le registre du disque système.

3. Procédé de mise à jour d'un ordinateur de bureau en nuage selon la revendication 2, dans lequel le fichier invité est un fichier partiellement alloué.

4. Procédé de mise à jour d'un ordinateur de bureau en nuage selon la revendication 2, dans lequel après avoir construit à l'avance l'image de base du système d'exploitation et alloué individuellement le disque indépendant à la machine virtuelle correspondant au bureau en nuage, le procédé comprend en outre :
la génération de deux images différentielles pour la machine virtuelle en fonction de l'image de base (402), dans lequel une image différentielle étant configurée pour le démarrage du système d'exploitation de la machine virtuelle et l'autre image différentielle étant configurée pour la création du fichier invité.

5. Procédé de mise à jour d'un ordinateur de bureau en nuage selon la revendication 4, dans lequel le fichier invité est créé par :
l'analyse complète de l'autre image différentielle après le démarrage du système d'exploitation de la machine virtuelle ;
la génération du fichier de disque virtuel en fonction d'un résultat d'analyse (403), dans lequel le fichier de disque virtuel comprenant le registre de la machine virtuelle et le fichier invité en correspondance biunivoque avec le fichier de stockage sur le disque système ; et
la construction d'un flux de données alternatif (ADS) pour chaque fichier invité (404), un nom de l'ADS comprenant un identificateur de fichier d'un fichier de stockage correspondant dans le disque système.

6. Procédé de mise à niveau d'un ordinateur de bureau en nuage selon la revendication 2, dans lequel l'enregistrement de la modification apportée par l'utilisateur au disque système est stocké dans le disque indépendant par :
le filtrage d'une opération du disque système à l'aide d'un pilote de filtrage du système de fichiers du système d'exploitation, et la redirection de l'opération filtrée du disque système vers le fichier invité correspondant au fichier de stockage exploité et au registre de la machine virtuelle (102).

7. Procédé de mise à jour d'un ordinateur de bureau en nuage selon la revendication 6, dans lequel la redirection de l'opération filtrée pour le disque système vers le fichier invité correspondant au fichier de stockage exploité comprend :
en réponse à l'opération filtrée qui est une demande d'écriture dans le fichier de stockage,
l'écriture des données modifiées de manière progressive dans le fichier invité correspondant, et l'enregistrement de l'emplacement des données écrites.

8. Procédé de mise à jour d'un ordinateur de bureau en nuage selon la revendication 1, dans lequel la mise à jour du fichier invité en fonction de l'enregistrement du fichier de la modification comprend :
la suppression du fichier invité en réponse à un conflit existant entre l'enregistrement de l'opération pour le fichier de stockage correspondant enregistré dans le fichier invité et
l'enregistrement d'une opération pour le fichier de stockage correspondant enregistré dans l'enregistrement de la modification du fichier ; et
la régénération d'un fichier invité correspondant en fonction du fichier de stockage correspondant enregistré dans l'enregistrement de la modification du fichier.

9. Serveur en nuage, comprenant :
au moins un processeur (702) ; et
une mémoire (701) connectée de manière communicative à l'au moins un processeur (702) ; dans lequel,
la mémoire (701) est configurée pour stocker des instructions exécutables par l'au moins un processeur (702), et les instructions, lorsque exécutées par l'au moins un processeur (702),
permettent à l'au moins un processeur (702) d'exécuter le procédé de mise à jour d'un ordinateur de bureau en nuage selon l'une quelconque des revendications 1 à 8.

10. Support de stockage lisible par ordinateur stockant un programme informatique qui, lorsqu'il est exécuté par un processeur, permet à ce dernier d'exécuter le procédé de mise à jour d'un ordinateur de bureau en nuage selon l'une quelconque des revendications 1 à 8.
